# EUROPEAN PATENT APPLICATION

(11) **EP 4 668 249 A1**
(43) Date of publication of application: **24.12.2025**
(21) Application number: 24182633.8
(22) Date of filing: 17.06.2024
(51) Int. Cl.: G09B 23/28, G09B 23/30

(54) **3-DIMENSIONAL VASCULAR MODELS**

(71) Applicant: ETH Zurich, 8092 Zurich (CH)
(72) Inventor: NELSON, Bradley, 8126 Zumikon (CH); MATTMANN, Michael, 8804 Au (CH); DREYFUS, Roland, 8057 Zürich (CH); LANDERS, Fabian, 8005 Zürich (CH); THEILER, Pascal, 8005 Zürich (CH)

(57) **Abstract**

The present invention is directed to a method for preparing 3-dimensional vascular models comprising the 3-dimensional imaging, printing and embedding of 3-dimensional vasculature and subsequent selective dissolution of the printed and embedded 3-dimensional vasculature in the 3-dimensional material. Furthermore, the present invention relates to the 3-dimensional vascular model prepared by the inventive method as well as to methods for the *in vitro* practice of a surgical method in an animal or human and a method for a surgical intervention in the vasculature of an animal or human in need thereof.

## Description

The present invention is directed to a method for preparing 3-dimensional vascular models comprising the 3-dimensional imaging, printing and embedding of 3-dimensional vasculature and subsequent selective dissolution of the printed and embedded 3-dimensional vasculature in the 3-dimensional material. Furthermore, the present invention relates to the 3-dimensional vascular model prepared by the inventive method as well as to methods for the *in vitro* practice of a surgical method in an animal or human and a method for a surgical intervention in the vasculature of an animal or human in need thereof.

Medical imaging, particularly Magnetic Resonance Angiography (MRA) and Computed Tomography Angiography (CTA), is crucial for the precision of endovascular interventions, allowing for the visualization of a patient's entire 3D vascular structure. Advanced algorithms can transform these imaging data into digital 3D geometrical representations of the vascular network, aiding surgeons in diagnosing conditions and formulating intervention strategies. However, there exists a significant gap in the current medical practice. At present, there are no means for surgeons to practically test and rehearse their chosen treatment strategies before the actual intervention. This limitation is particularly critical in complex endoluminal interventions, such as embolizing unruptured aneurysms. Surgeons have to rely solely on their experience and the digital geometries that medical imaging provides for selecting tools and approaches for these delicate procedures. This reliance on digital-only preparation and personal experience, without the possibility of in-vitro practice, poses a risk to both the success of the surgery and patient safety.

To address this gap, 3D vascular brain models offer a versatile solution. These models are designed to enable the rehearsal of endoluminal interventions, provide hands-on training for medical professionals, and assist in the research and development of medical devices for endoluminal procedures. By creating patient-specific 3D models based on detailed imaging data, surgeons can physically practice and refine their intervention techniques in a realistic and controlled environment.

The commercial market for vascular models currently encompasses two primary categories: non patient-specific and patient-specific models. Each type employs distinct manufacturing techniques, resulting in different levels of realism, complexity, and usability.

Non patient-specific models are typically produced using a multi-step molding process involving silicone structures. Due to the nature of the molding process, these models are constrained in their 3D complexity. Features like 180° turns in all three dimensions are challenging to achieve.

The requirement to fit within the molding process's constraints necessitates simplifying the vascular structures. As a result, these models often lack the realistic intricacy found in actual human vasculature. The smallest achievable resolution in these models is approximately 2 mm, which may not be sufficient for detailed surgical planning or training. Examples of these non-patient-specific models can be obtained from Trandomed (TrandoMed, HangzhouBay New Zone, 315336, Ningbo CH), United Biologics (United Biologics Inc., 1642 Kaiser Avenue, Irvine CA 92614, US) and Shelly Medical (Shelly Medical Imaging Technology, London, Ontario Canada).

Patient-specific models typically use resin-based 3D printing to create the vascular models. The layer-by-layer printing approach leads to so-called "steps" (layering effect) within the vessel structures, resulting in non-tolerable surface roughness. This roughness can significantly impact the accuracy of simulating the behavior of medical devices within the vessels. Typically, direct-resin 3D printing cannot produce transparent and soft models, which are essential qualities for realistic simulation and observation. The lack of transparency in these models hinders easy visual observation, and the rigidity of the resin material does not accurately replicate the flexibility of real vascular tissues. The vessel resolution of direct 3D printing is around 2 mm - 1.5 mm. Such models can be obtained from Mentice (Mentice AB, Odinsgatan 10, 411 03 Gothenburg, SE).

WO2021/137173A1 discloses a multi-material 3D-printed portion of a heart that mimics an anatomical shape and a mechanical behavior of the heart.

US20130288218A1 teaches a 3D-model of a heart having left and right atrium, pulmonary veins, fossa ovalis and inferior vena cava for simulating a medical procedure.

It is the objective of the present invention to provide 3-dimensional vascular models, optionally including sub-millimeter vessels that would otherwise be impractical or impossible to fabricate using traditional methods. It is a further objective to provide a highly detailed, physically accurate representation of an animal's or human specific vascular network, offering opportunities for surgical rehearsal, medical training, and device development in endoluminal interventions, medical training, and medical device development. Last but not least, it is an objective of the present invention to provide a method for preparing these 3-dimensional vascular models.

This objective is solved by a method for preparing 3-dimensional vascular models, comprising the steps of:
(i) 3-dimensional imaging and generating 3-dimensional imaging data of vasculature in an animal or human, or generating 3-dimensional imaging data of vasculature in an animal or human;
(ii) 3-dimensional printing of the data of vasculature in an animal or human of step (i);
(iii) embedding at least part of the printed 3-dimensional vasculature in a 3-dimensional material;
(iv) selective dissolution of at least a part of interest, optionally all of the printed and embedded 3-dimensional vasculature in the 3-dimensional material.

The method of the present invention results in an embedded 3-dimensional vasculature that is hollow and surrounded 3-dimensionally by the embedding material. The embedded 3-dimensional vasculature is a highly detailed, physically accurate representation of an animal's or human, optionally a patient-specific vascular network, offering the opportunity, for example, for surgical rehearsal, medical training, and medical device development. The method of the invent-tion allows for preparing 3-dimensional models of vasculature with smaller vessel sizes in the sub-mm range, 3-dimensional vessel geometries of arbitrary complexity, patient-specific, soft, smooth, and/or transparent vasculature mimicking natural vasculature properties.

A 3-dimensional biological model in the context of the present invention is either physical or digital, and simulates or emulates a specific biological space or structure. It is typically constructed or computed to accurately reflect the anatomical and/or physiological characteristics of the biological space it is inspired by. It is designed to provide a scaled or actual-size three-dimensional depiction that can be utilized for various purposes including but not limited to testing, analysis, demonstration, or educational objectives in a controlled and replicable manner.

The term "3-dimensional vascular model", as used herein, is meant to indicate that the model replicate fully reflects the 3-dimensional physical shape(s) of a dead or live animal or human vasculature, which model replicate may optionally be a 1:1 size scale model, enlarged or reduced in size.

The terms "vascular, vasculature", as used herein, are meant to include all aspects of the circulatory system which encompasses the cardiovascular system and the complementary lymphatic system. The circulatory system is a system of organs that includes the heart, blood vessels, lymphatic vessels, blood, and lymph, which are circulated throughout the entire body of a human or other vertebrate.

In vertebrates, the lymphatic system is complementary to the vascular system. The lymphatic system carries excess plasma (filtered from the circulatory system capillaries as interstitial fluid between cells) away from the body tissues via accessory routes that return excess fluid back to blood circulation as lymph. The lymphatic system is a subsystem that is essential for the functioning of the blood circulatory system; without it the blood would become depleted of fluid. The lymphatic system also works with the immune system. The circulation of lymph takes much longer than that of blood and, unlike the closed (blood) circulatory system, the lymphatic system is an open system. Some sources describe it as a *secondary circulatory system.*

The terms "imaging, 3-dimensional imaging", as used herein, are directed to the generation of an image that is three-dimensional and also encompass the data for generating a 3-dimensional image. Typical devices and methods for imaging biological materials are, for example, selected from the group consisting of Magnetic resonance imaging (MRI), Magnetic Resonance Angiography (MRA), Computed Tomography Angiography (CTA), Positron Emission Tomography (PET), Ultrasound imaging, and computer-generated vasculature imaging (not patient specific). Magnetic resonance imaging (MRI) and magnetic resonance angiography (MRA) are non-invasive medical imaging techniques that use powerful magnets, radio waves, and a computer to generate detailed images of the internal structures of the body. Computed tomography (CT) and computed tomography angiography (CTA) are medical imaging techniques that use X-rays and computer processing to create detailed images of the body. Positron emission tomography (PET) is a medical imaging technique that involves the use of a radioactive tracer to detect and visualize biochemical processes within the body. During a PET scan, the patient is injected with a small amount of a radioactive substance, known as a radiotracer, which emits positrons. In other words, the 3-dimensional imaging data of vasculature mentioned in step (i) and for 3-dimensional printing can be obtained from a real 3-dimensional image or simply be generated electronically (computer-implemented).

During an imaging process, so-called noise or artifact(s) can be generated. An artifact, in the context of medical imaging, refers to any unintended or anomalous appearance on an image component that is not representative of the actual anatomy or pathology being studied. Artifacts can result from various factors, such as patient motion during the scan, equipment malfunction, image processing errors, or foreign objects in the field of view. These artifacts may obscure or distort important diagnostic information.

In one optional embodiment of the present invention, the method comprises a step, wherein artifacts are eliminated after (1) imaging, (2) after imaging and generating 3-dimensional imaging data, or (3) after generating the 3-dimensional imaging data in step (i), and/or in the data for 3-dimensional printing of the vasculature in step (ii). In short, artefacts can be eliminated before printing.

The 3-dimensional print of the vasculature can be very delicate and even include sub-mm structures. Also, the printed vascular structures can optionally be brittle and highly susceptible to breakage, in particular before optionally being further processed or embedded.

In a further optional embodiment of the present invention, the vasculature is printed with support structures for structural stability of the 3-dimensional print during print, wherein the printed support structures optionally have a different solubility than the printed 3-dimensional vasculature, and optionally removal of the support structures by selective dissolution after or during the completion of the print.

Furthermore, and depending on the printing method, the printed vasculature can turn out "rough", for example, comprise "layer lines". In order to remove this roughness of the printed vasculature, the printed vasculature may optionally be surface-treated for planning, optionally by
(a) solvent smoothing (partial dissolution of the surface, e.g. contact of vasculature with liquid solvent), optionally solvent vapor smoothing (e.g. contact of vasculature with solvent vapor);
(b) coating, optionally spray coating, deposition coating, chemical vapor deposition, optionally by a coating or deposition layer with a thickness of up to about 1 to about 1000 microns, optionally about 5 to about 50 microns, optionally about 100 to about 200 microns;
(c) etching, optionally by acid or base etching, electrolytic etching, chemical etching, cathodic etching, or sputter etching; and/or
(d) mechanical smoothing, optionally griding or abrasive blasting; and
(e) optionally dying the surface-treated printed vasculature.

In a general sense, the term "coating" refers to a layer of material applied to the surface of an object. Chemical vapor deposition (CVD) is a process used to create thin films or coatings on a substrate surface by introducing reactive gases into a chamber containing the substrate.

The printed and optionally support structure-removed and/or surface-treated (planning, optionally dying) vasculature is then embedded in opaque, transparent and/or colored 3-dimensional materials.

For example, 3-dimensional materials for embedding the printed and optionally processed 3-dimensional vasculature comprise or consist of a polymer selected from the group consisting of silicones, polylactic acid (PLA), acrylonitrile-butadiene-styrene-copolymer (ABS), polyethylene terephthalate (PET), polypropylene (PP), polyethylene (PE), polyamide (PA), thermoplasts, duroplasts, styrene-butadiene-rubber (SBR), nitrile butadiene rubber (NBR), chloroprene resin (CR), fluorocarbon-based fluoroelastomers (FKM), butadiene-rubber (BR), ethylene-propylene-diene monomer rubber (EPDM) - elastomers, polyurethane (PUR), phenolic resin, urea resin, melamine resin, polyester resin, epoxide resin, poly-dimethyl siloxane (PDMS), silicone resin, optionally polymethyl siloxane, polymethylphenyl siloxane, and silicon resin.

Optional embodiments of polymers for use as 3-dimensional materials for embedding the printed and optionally processed 3-dimensional vasculature are RTV-27 silicone resin (Suter Kunststoffe AG, Aefligenstrasse 3, 3312 Fraubrunnen, CH), PVA-DMSO hydrogel resin (Merck & Cie, Industriestrasse 25, 9470 Buchs, CH), and Sikabiresin transparent epoxy resin (Sika Schweiz AG, Marketing Service, Tüffenwies 16, 8048 Zürich, CH).

The term embedding, as used herein, refers to the process of encapsulating or enclosing an object within a medium to provide support, protection, or integration into a larger structure.

The term "selective dissolution", as used herein, refers to the process of dissolving or removing specific materials from a substance while leaving parts of it or other substances intact.

In a further aspect, the present invention pertains to a 3-dimensional vascular model prepared or preparable by a method of the present invention.

Optional embodiments of a 3-dimensional vascular model prepared or preparable by the method of the present invention are those, wherein
(i) printing polymers for vasculature are selected from ABS, ASA, PVC, PVB, PC, PLA, PET, and PETG, optionally ABS, ASA, and PETG;
(ii) solvents for vasculature are selected from water, alkaline aqueous solution, acetone, isopropyl alcohol, limonene, methanol, ethanol, nitric acid, and sulfuric acid, optionally water, acetone, isopropyl alcohol, and limonene;
(iii) printing polymers for support structures are selected from PVA, BVOH, HiPS, PLA, PET, and PETG, optionally PVA, BVOH, and HiPS;
(iv) solvents for support structures are selected from water, alkaline aqueous solution, acetone, isopropyl alcohol, limonene, methanol, ethanol, nitric acid, and sulfuric acid optionally water, alkaline aqueous solution, and limonene;
(v) embedding polymers are selected from ABS, ASA, PVC, PVB, PC, PLA, PET, PETG, optionally ABS, ASA, and PETG;
(vi) planning methods are selected from vapor smoothing, selective edging, selective dissolution, laser ablation, physical vapor deposition, electroplating, mechanical ablation, milling, lathe, optionally vapor smoothing, and selective dissolution.

Further optional embodiments of a 3-dimensional vascular model prepared or preparable by the method of the present invention are those, wherein
(i) printing polymers for vasculature are selected from ABS, ASA, and PETG;
(ii) solvents for vasculature are selected from acetone, isopropyl alcohol, and nitric acid;
(iii) printing polymers for support structures are selected from PVA, BVOH, and HiPS;
(iv) solvents for support structures are selected from water, alkaline aqueous solution, and limonene;
(v) embedding polymers are selected from ABS, ASA, and PETG and/or PVA
(vi) planning methods are selected from vapor smoothing, selective edging, and selective dissolution

For example, optional polymer / solvent pairs for use in the present invention may include but are not limited to:
- for vascular structures: ABS / acetone, ASA / acetone, PVC / acetone, PVB / isopropyl alcohol, PVB / ethanol, PVB / Acetone, PC / acetone, PLA / isopropyl alcohol, PLA / nitric acid, PLA / sulfuric acid, PET / nitric acid, PET / sulfuric acid, PETG / nitric acid, PETG / sulfuric acid;
- for support structures: PVA / water, BVOH / water, BVOH / alkaline aqueous solution, HiPS / limonene, PLA / isopropyl alcohol, PLA / nitric acid, PLA / sulfuric acid, PETG / nitric acid, PETG / sulfuric acid.

In an optional embodiment, the 3-dimensional vascular model prepared according to the invention, is one wherein ABS is used as the vasculature printing material, PVA is used as the support material, water for support material removal, and acetone is used as the vapor smoothing solvent and is also used as the selective dissolution solvent.

Optionally, the 3-dimensional models of vasculature of the invention should reflect the properties of natural vasculature not only in dimensions but also in other properties such as inner surface roughness. For example, the 3-dimensional model of vasculature in an animal or human embedded in a 3-dimensional material and according to the present invention may comprise hollow vasculature structures in natural animal or human dimensions, optionally with a surface roughness of about 0.02*µm* to about 2*µm,* optionally about *Ra* ≅ 0.96*µm.*

In a further aspect, the present invention reads on a method for the *in vitro* practice of a surgical method in an animal or human, wherein the surgical method is selected from the group consisting of intravascular navigation, thrombectomy, coiling of aneurism, embolization, implantation of medical devices, stent implantation, drug device implantation, shunt implantation, intrathecal intervention, biopsy, and drug administration.

Another aspect of the present invention is directed to a method for a surgical intervention in the vasculature of an animal or human in need thereof, comprising the steps of
(1) obtaining a 3-dimensional vascular model of the animal or human in need of surgical intervention prepared by a method of the present invention;
(2) practicing the surgical intervention on the obtained 3-dimensional model, and
(3) performing the surgical intervention in the vasculature of the animal or human in need thereof.

Optionally, the surgical intervention is selected from the group consisting of intravascular navigation, thrombectomy, coiling of aneurism, embolization, implantation of medical devices, stent implantation, drug device implantation, shunt implantation, intrathecal intervention, biopsy, and drug administration.

In the following the present invention is illustrated by representative examples and figures, none of which are considered limiting the invention beyond the scope of the appended claims.

### Figures

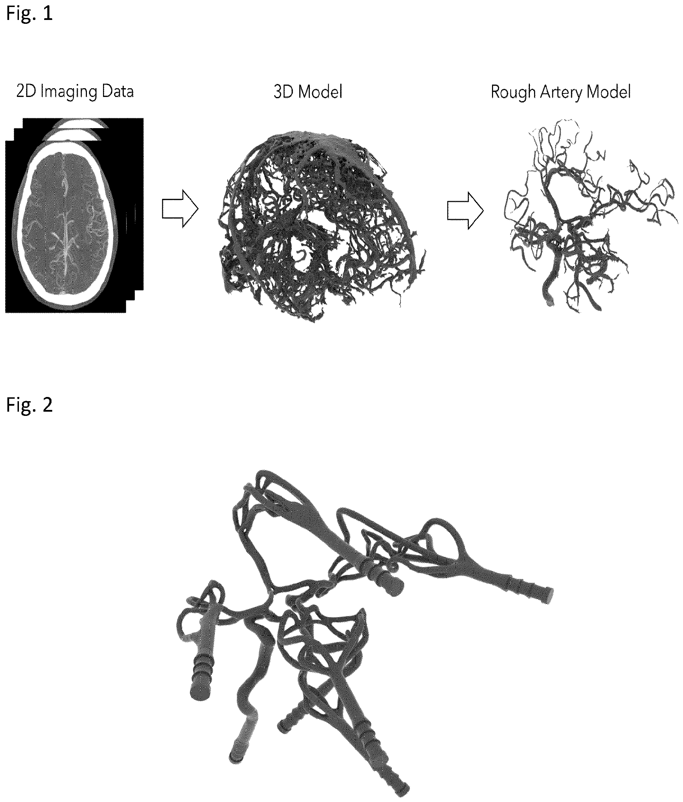

**Fig. 1** **left figure** is a computed image of three layers of 2-dimensional human brain imaging data obtained by Computed tomography (CT) (Aquilion ONE, Canon Medical Systems AG/SA Switzerland (previously Toshiba), Richtistr. 9, CH- 8304 Wallisellen, Switzerland);
**Fig. 1** **middle figure** is a computed image of a digitally rendered, segmented 3D vascular brain model from a stack of 2D CTA images (Fig. 1 left)
**Fig. 1** **right figure** is a computed image of a post-processed arterial 3D vascular brain model;
**Fig. 2** is a digitally rendered, support-removed, and surface-planned 3D arterial human brain vasculature with hose connector-shaped connections integrated for later selective dissolution of the vasculature in the embedding material by, e.g. acetone dissolution;
**Fig. 3** is a photographic image of a 3D-printed ABS vasculature with PVA support structure;
**Fig. 4** is a photographic image of a transparent 3-dimensional arterial human brain model embedded in transparent silicone.

### Examples

### Example 1 - 3D-imaging of arterial brain vasculature and post-processing

For generating a human patient's medical vasculature image a stack of about 40 to 4000 2D images was taken by Computed tomography (CT) (Aquilion, Aquilion ONE, Canon Medical Systems AG/SA Switzerland (previously Toshiba), Richtistr. 9, CH- 8304 Wallisellen, Switzerland). (Fig. 1 left) These images were subjected to segmentation, a step where specialized software, e.g. from Slicer 3D (Slicer 3D, Slicer community (open source project)) isolated the vascular structures from the surrounding tissues. Subsequently to the segmentation process, the software reconstructed the segmented vascular data into a highly detailed but "noisy" 3-dimensional model. The term "noise" refers to the presence of artifacts within vasculature and/or the 3D model data. This model provided a representation of the patient's unique vascular system, including arteries and veins. The resulting model data provided an exact representation of the patient's unique vascular system, including very small arteries and veins in natural dimensions.

### (Fig. 1 middle)

For some applications only arterial blood vessels may be relevant and in this example a clear differentiation between arteries and veins was made, followed by the subsequent deletion of veins from the data set. For differentiation and deletion of imaging data, several software tools are available to facilitate this process, for example, the Mimics^{®} (Materialise HQ, Technologielaan 15, 3001 Leuven, Belgien) or OsiriX^{®}'s Vascular Modeling Toolkit (VMTK) (Pixmeo SARL, 266 Rue de Bernex, CH-1233 Bernex, CH). In the present example, the VMTK was used to filter the blood vessels to provide a complete but still noisy representation of the patient's arterial brain structure that was exported in STL file format. STL is a file format commonly used for 3D printing and computer-aided design (CAD). The name STL is an acronym that stands for stereolithography - a popular 3D printing technology. It is also referred to as Standard Triangle Language or Standard Tessellation Language.)

The artifacts typically arise from the process of thresholding the sectional data, which involves setting a threshold value to determine what constitutes vessels and what does not. These artifacts emerge due to vagueness in the medical images and the need for extrapolation between individual segments used to generate the 3D model. The noise will vary with the imaging method applied.

Following the optional separation of arterial and venous blood vessels, the next optional step involved noise reduction, aimed at eliminating sizable artifacts. This process involves a smart interpretation of the model, primarily based on the assumption that blood vessels tend to exhibit a smooth, continuous and predominantly round structure. (Fig. 1 right)

For further processing, the open-source software Meshmixer^{®} (Autodesk GmbH, Balan- str. 71a, 81541 Munich, Germany) known for its proficiency for STL files was utilized. It provides for comprehensive mesh editing, sculpting tools, mesh analysis, and auto-repair capabilities. At the same time, it ensures structural integrity. It allows complex geometric modifications and allows to combine, sculpt, and transform models seamlessly, and it offers efficient support generation, lattice structure creation, and additive manufacturing.

Small vessel artifacts that remained after the initial coarse noise reduction in VMTK were removed and adjustments, like re-meshing and mesh size reductions, were made to the mesh structure where needed. For streamlining the handling of the model, inlets and outlets were added and organized into groups, thus preventing the need for numerous individual tube connections to the model.

The connector points were then transformed to a specific connector geometry. Here, HD-PE (high density polyethylene (Connector PE-HD ø 8 mm, Art. 980), Semadeni AG, Tägetlistrasse 35-39, CH - 3072 Ostermundigen, CH) tube connectors were selected. These connectors had an outer diameter of D = 8 mm and an inner diameter of d = 5mm featuring a hook like geometry on the outside to ensure secure placement within the model and a clean seal between the connector and the model. (Fig. 2)

### Example 2 - 3D-printing of arterial brain vasculature and post-processing

For printing intricate vasculature structures, for example, Stereolithography (SL) and Fused deposit modeling (FDM) processes can be used. In FDM, large, overhang-heavy models necessitate a support structure for proper printing. Typically, this support structure is constructed from the same material as the object itself. To facilitate its removal post-printing, the printer was adjusted to ensure a slight gap between the support and the object (known as contact distance). In most cases, this allowed for a simple detachment of the support structure. However, this approach demands an object with inherent mechanical stability. Otherwise, there would arise a risk that detaching the support structure could cause damage and lead to parts of the object breaking off. Multi-material printers offer a solution to this issue. Using a different material for the support structure, the bond between the object and the support can be weakened while the contact between them can be minimized. This results in higher quality print results and almost completely eliminates the risk of damage especially when using water-soluble support filaments, where no manual intervention is necessary to remove the supports. In this scenario, the use of a water-soluble filament is ideal. By using an IDEX 3D printing system (Modified Sovol SV04) and utilizing two separate print heads any potential contamination from residues of the other filament was avoided and exceptional print quality were achieved.

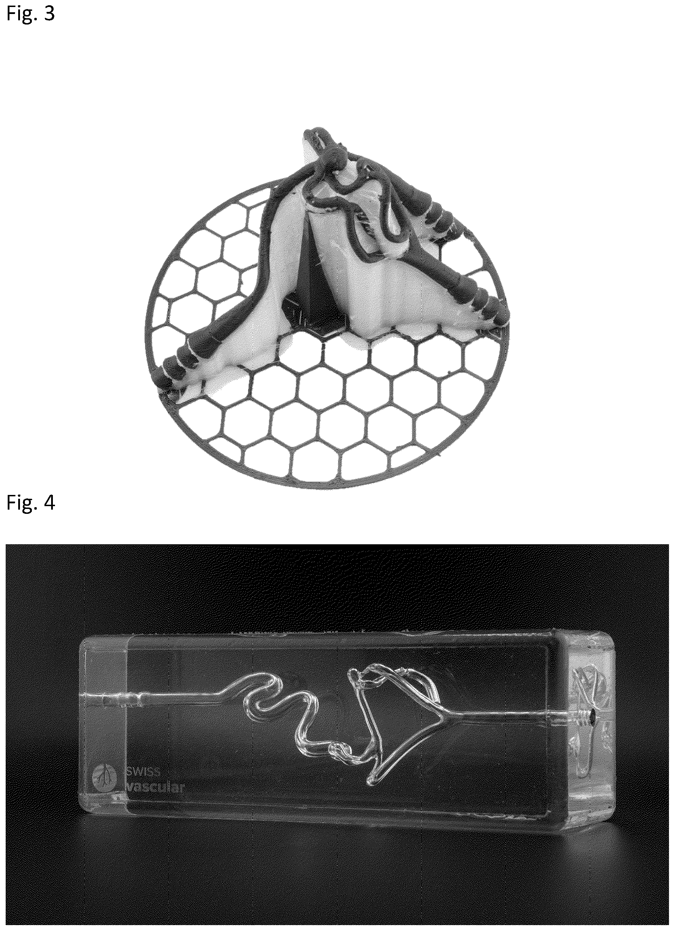

Routine testing resulted in an optimal filament brand combination for this particular application. The pairing of Natural PVA (eSun, Microsoft Comtech Tower, No. 55 Gaoxin South 9th Road, Nanshan District, Shenzhen, CH) and DuraPro ABS (Extrudr, FD3D GmbH, Klosterstraße 13, 6923 Lauterach, AT) performed well, consistently delivering high standards in print quality and reliability Fig. 3.

After the printing process the removal of the PVA support material was achieved by immersing the model in warm water (for example, about 40 to 80°C). For larger complete brain models, the dissolution process can, for example, take between 12 to 15 hours. Smaller partial models can, for example, be fully dissolved in less than 12 hours. To accelerate the process, exchanging the water multiple times proved advantageous.

Optionally, for achieving a smoother surface finish and eliminating any layer lines created during, for example, FDM or SL 3D printing, a vapor smoothing step can be and in the present case was applied. This process involved exposing the model to vapors generated from a solvent that is incompatible (slowly dissolving) with the model's material. For the ABS 3D-printed vasculature, acetone vapor smoothing was employed. Acetone was heated in a sealed container for creating a high vapor concentration. The ABS model was then exposed to this vapor in short cycles (1-5) lasting a few minutes each (0.5 - 8 minutes). The solvent-enriched atmosphere then gradually and uniformly reduced the gradients respective layer lines on the model's surface. After a few minutes, the layer lines disappeared, leaving the surface smooth and sealed.

Following the smoothing process, the printed vasculature model was further prepared for embedding. This involved securing the model within a mold and subsequently casting it using silicone. For this specific application silicone was chosen for its elasticity, which allows for an ideal imitation of human tissue flexibility. For the casting the highly transparent silicone compound NEUKASIL RTV 27 with the cross-linker NEUKASIL A43 was used. The "RTV" designation of the silicone indicates Room Temperature Vulcanization, meaning this two-component, high-transparency silicone cures rapidly at room temperature. NEUKASIL RTV 27 features low viscosity, a Shore A hardness of 42, and an adjustable processing time when using a different cross-linker.

After curing, acetone was circulated through the silicone model around the 3D printed ABS vessel structure using 12V D2028B pumps. This process gradually dissolves the ABS within the silicone block until no traces of ABS remain inside the silicone vascular model. Subsequent to the dissolving process, the model was immersed in an ultrasonic bath to eliminate any residues from the silicone model. For this purpose, the Sonorex Super RK 510H was used, resulting in the silicone vascular model of Fig. 4.

## Claims

1. A method for preparing 3-dimensional vascular models, comprising the steps of:
(i) 3-dimensional imaging and generating 3-dimensional imaging data of vasculature in an animal or human, or generating 3-dimensional imaging data of vasculature in an animal or human;
(ii) 3-dimensional printing of the data of vasculature in an animal or human of step (i);
(iii) embedding at least part of the printed 3-dimensional vasculature in a 3-dimensional material;
(iv) selective dissolution of at least a part of interest of the printed and embedded 3-dimensional vasculature in the 3-dimensional material.

2. The method of claim 1, wherein the 3-dimensional imaging data of vasculature in an animal or human is obtained from an imaging method selected from the group consisting of Magnetic resonance imaging (MRI), Magnetic Resonance Angiography (MRA), Computed Tomography Angiography (CTA), Positron Emission Tomography (PET), Ultrasound imaging, and computer-generated vasculature imaging.

3. The method of claim 1 or 2, wherein artifacts are eliminated after (1) imaging, (2) after imaging and generating 3-dimensional imaging data, or (3) after generating the 3-dimensional imaging data in step (i), and/or in the data for 3-dimensional printing of the vasculature in step (ii).

4. The method of any one of claims 1 to 3, wherein the 3-dimensional printing of the data of the vasculature is printed with support structures for structural stability of the 3-dimensional print during print, wherein the printed support structures optionally have a different solubility than the printed 3-dimensional vasculature, and optionally removal of the support structures by selective dissolution after or during the completion of the print.

5. The method of any one of claims 1 to 4, wherein the printed vasculature of step (ii) is surface-treated for planning, optionally by
(a) solvent smoothing, optionally solvent vapor smoothing;
(b) coating, optionally spray coating, deposition coating, chemical vapor deposition, optionally by a coating or deposition layer with a thickness of up to about 1 to about 1000 microns, optionally about 5 to about 50 microns, optionally about 100 to about 200 microns;
(c) etching, optionally by acid or base etching, electrolytic etching, chemical etching, cathodic etching, or sputter etching; or
(d) mechanical smoothing, optionally griding or abrasive blasting; and
(e) optionally dying the surface-treated printed vasculature.

6. The method of any one of claims 1 to 5, wherein the 3-dimensional material for embedding the printed 3-dimensional vasculature in step (iii) is selected from opaque, transparent and/or colored 3-dimensional materials.

7. The method of any one of claims 1 to 6, wherein the 3-dimensional material comprises a polymer selected from the group consisting of silicones, polylactic acid (PLA), acrylonitrile-butadiene-styrene-copolymer (ABS), polyethylene terephthalate (PET), polypropylene (PP), polyethylene (PE), polyamide (PA), thermoplasts, duroplasts, styrene-butadiene-rubber (SBR), nitrile butadiene rubber (NBR), chloroprene resin (CR), fluorocarbon-based fluoroelastomer (FKM), butadiene-rubber (BR), ethylene-propylene-diene monomer rubber (EPDM) - elastomers, polyurethane (PUR), phenolic resin, urea resin, melamine resin, polyester resin, epoxide resin, poly-dimethyl siloxane (PDMS), silicone resin, optionally polymethyl siloxane, polymethylphenyl siloxane, silicon resin.

8. A 3-dimensional vascular model prepared or preparable by a method of any one of claims 1 to 7.

9. The 3-dimensional vascular model prepared according to claim 8, wherein
(i) printing polymers for vasculature are selected from ABS, ASA, PVC, PVB, PC, PLA, PET, and PETG, optionally ABS, ASA, and PETG;
(ii) solvents for vasculature are selected from water, alkaline aqueous solution, acetone, isopropyl alcohol, limonene, methanol, ethanol, nitric acid, and sulfuric acid, optionally water, acetone, isopropyl alcohol, and limonene;
(iii) printing polymers for support structures are selected from PVA, BVOH, HiPS, PLA, PET, and PETG, optionally PVA, BVOH, and HiPS;
(iv) solvents for support structures are selected from water, alkaline aqueous solution, acetone, isopropyl alcohol, limonene, methanol, ethanol, nitric acid, and sulfuric acid optionally water, alkaline aqueous solution, and limonene;
(v) embedding polymers are selected from ABS, ASA, PVC, PVB, PC, PLA, PET, PETG, optionally ABS, ASA, and PETG;
(vi) planning methods are selected from vapor smoothing, selective edging, selective dissolution, laser ablation, physical vapor deposition, electroplating, mechanical ablation, milling, lathe, optionally vapor smoothing, and selective dissolution.

10. A 3-dimensional vascular model prepared according to claim 8 or 9, wherein
(i) printing polymers for vasculature are selected from ABS, ASA, and PETG;
(ii) solvents for vasculature are selected from acetone, isopropyl alcohol, and nitric acid;
(iii) printing polymers for support structures are selected from PVA, BVOH, and HiPS;
(iv) solvents for support structures are selected from water, alkaline aqueous solution, and limonene;
(v) embedding polymers are selected from ABS, ASA, and PETG and/or PVA
(vi) planning methods are selected from vapor smoothing, selective edging, and selective dissolution.

11. A 3-dimensional model of the vasculature in an animal or human embedded in a 3-dimensional material, comprising hollow vasculature structures in natural animal or human dimensions, optionally with a surface roughness of about 0.02 *µm* to about 2 *µm* optionally about *Ra* ≅ 0.96*µm.*

12. A method for the *in vitro* practice of a surgical method in an animal or human, wherein the surgical method is selected from the group consisting of intravascular navigation, thrombectomy, coiling of aneurism, embolization, implantation of medical devices, stent implantation, drug device implantation, shunt implantation, intrathecal intervention, biopsy, and drug administration.

13. A method for a surgical intervention in the vasculature of an animal or human in need thereof, comprising the steps of
(1) obtaining a 3-dimensional vascular model of the animal or human in need of surgical intervention prepared by a method of any one of claims 1 to 7;
(2) practicing the surgical intervention on the obtained 3-dimensional model, and
(3) performing the surgical intervention in the vasculature of the animal or human in need thereof.
